# FASCICULE DE BREVET EUROPEEN

(11) **EP 2 584 210 B1**
(45) Date de publication et mention de la délivrance du brevet: **10.12.2014**
(21) Numéro de dépôt: 12188829.1
(22) Date de dépôt: 17.10.2012
(51) Int. Cl.: F16C 32/04, H02K 5/128, H02K 7/09

(54) **Stator chemisé de machine électromagnétique pour ambiance corrosive sans traitement thermique**
Verkleideter Stator einer elektromagnetischen Maschine für korrosive Umgebungen ohne Wärmebehandlung
Canned stator of an electromagnetic machine for a corrosive atmosphere without heat treatment

(30) Priorité: 20.10.2011 FR 1159484
(43) Date de publication de la demande: 24.04.2013
(73) Titulaire: SKF MAGNETIC MECHATRONICS, 27950 Saint-Marcel (FR)
(72) Inventeur: Baudelocque, Luc, 27200 VERNON (FR)
(74) Mandataire: David, Alain

(56) Documents cités:
- EP-A2- 1 113 182
- EP-A2- 1 863 152
- FR-A1- 2 938 028
- US-A- 5 698 917
- US-B2- 7 847 454

## Description

La présente invention concerne un stator chemisé de machine électromagnétique pour machine tournante pressurisée placé en contact avec un gaz de procédé contenant du H2S ou du CO2 humide.

Les applications des paliers magnétiques dans les machines tournantes se sont développées considérablement ces dernières années du fait de l'énorme avantage que procure leur fonctionnement directement dans le gaz de procédé de la machine considérée, sans étanchéité. Ainsi, et de façon non limitative, on trouve des paliers magnétiques sur les turboexpandeurs, sur les compresseurs frigorifiques, sur les moteurs électriques d'entraînement de compresseur, etc.

Dans les applications courantes, les circuits magnétiques sont tous à base de fer-silicium. Les tôles ferromagnétiques formant le matériau magnétique feuilleté de ces circuits ont ainsi l'avantage de présenter des caractéristiques magnétiques bien définies et garanties par leur fournisseur, notamment un cycle d'hystérésis limité ainsi qu'une perméabilité magnétique et une induction de saturation élevée.

Cependant, pour les applications plus particulières, dans un milieu acide, corrosif ou porteur de particules, le contact direct des tôles ferromagnétiques comme des bobinages avec le gaz de procédé s'avère impossible sans la mise en place de chemises qui isolent les circuits magnétiques du stator de cet environnement agressif et permettent donc d'utiliser pour ces circuits des matériaux classiques à base de fer-silicium.

En outre, classiquement, cette chemise doit avoir un coefficient d'expansion thermique identique aux tôles ferromagnétiques supportant le bobinage afin qu'elle ne se déforme pas en fonction de la température, ce qui conduirait vite à la destruction du stator par contact avec le rotor.

Aussi, un palier magnétique chemisé est communément constitué d'un assemblage de tôles ferromagnétiques bobinées inséré dans une enceinte hermétique à l'environnement dans lequel il est utilisé afin de le soustraire aux attaques corrosives de cet environnement. Chacun des constituants de cette enceinte ainsi que les liaisons entre eux doivent être résistants à la corrosion que pourrait provoquer cet environnement. De plus, dans les environnements dits « Oil and Gas », avec des applications plus spécifiques relevant de la norme ANSI/NACE MR0175/IS015156 « Petroleum and natural gas industries - Materials for use in H2S-containing environments in oil and gas production », les contraintes de dureté limitent le choix des matériaux.

Classiquement, le matériau magnétique généralement utilisé pour la chemise est un acier inoxydable martensitique à durcissement par précipitation. Malheureusement, pour être en accord avec les recommandations de la norme précitée, la soudure d'un tel matériau nécessite un traitement thermique (typiquement des recuits haute température réalisés à environ 620°C), ce qui est incompatible avec une chemise fine ou avec la tenue même des tôles ferromagnétiques bobinées qui classiquement ne peuvent supporter des températures supérieures à 250°C. Or, sans un tel traitement thermique, ces soudures perdent leur compatibilité anti-corrosion, ce qui complique très fortement la fabrication du palier et augmente de manière très significative ses coûts de mise en oeuvre.

Pour retrouver cette compatibilité, le brevet US7,847,454 a proposé l'utilisation d'une chemise de palier bi-matériaux traité thermiquement avant usinage final dont seule une partie centrale est réalisée en acier inoxydable martensitique à durcissement par précipitation, les autres parties de la chemise étant réalisées en un matériau non magnétique de sorte que lors des opérations d'assemblage final, seules des soudures compatibles avec la norme NACE MR0175 / ISO 15156, telles que des soudures entre matériaux non magnétiques restent à réaliser. De même, il est nécessaire d'adjoindre de nombreux inserts en matériau non magnétique sur les autres parties du support, leur soudure sur les parties magnétiques, le retraitement thermique de ces soudures, puis le ré-usinage des pièces afin de leur donner leur forme finale étant effectuées avant l'assemblage final.

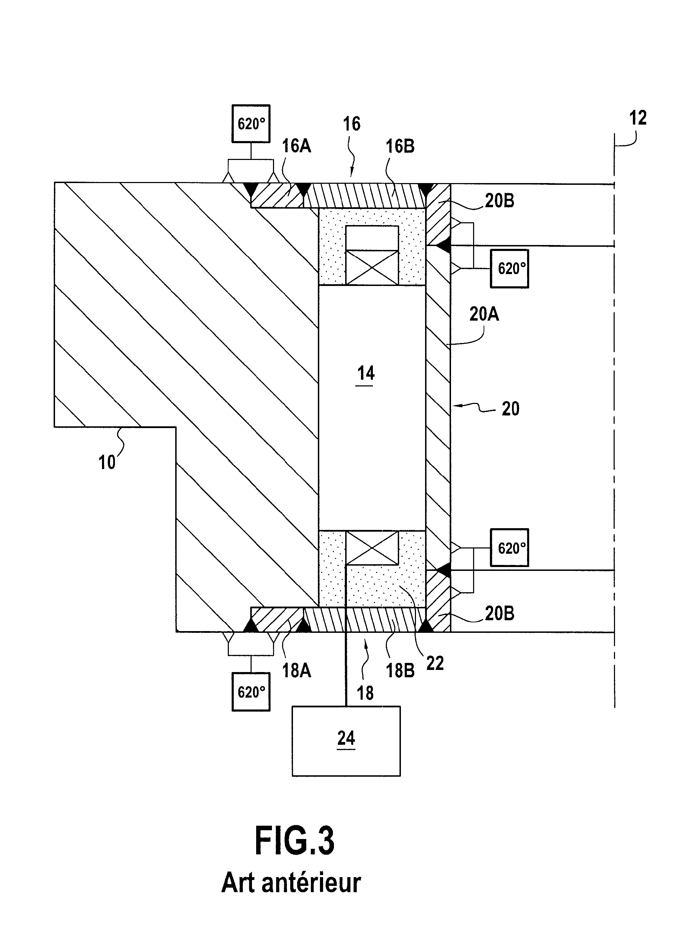

La figure 3 montre un exemple de stator de palier magnétique actif disposé dans une enceinte hermétique, tel que décrit dans le brevet précité. Cette enceinte est communément constituée d'un support cylindrique 10 d'axe longitudinal 12 et dans lequel est fretté un ensemble de tôles ferromagnétiques bobinées 14. Ce support est muni de parois 16, 18 sur chacune de ses faces latérales et l'enceinte est complétée par l'adjonction d'une chemise cylindrique 20 sur son diamètre intérieur en contact avec le gaz de procédé. L'enceinte est remplie en totalité d'une résine de surmoulage 22 pour que, en renforçant sa tenue mécanique, elle puisse être placée dans des ambiances pressurisées (jusqu'à quelques centaines de bars). Les bobinages (enroulements d'électro-aimants) du stator de palier sont reliés au travers d'une classique embase hermétique (non représentée) à des circuits électroniques de commande 24 qui, comme illustrés, peuvent être placés à l'extérieur de l'enceinte hermétique ainsi créée.

La chemise 20 est constituée d'une partie centrale cylindrique 20A réalisée en un matériau magnétique, typiquement un acier inoxydable martensitique à durcissement par précipitation de type 17-4 PH, munie à ses deux extrémités d'extensions 20B réalisées en un matériau non magnétique, typiquement en Inconel. Les parois 16, 18 sont aussi réalisés en deux parties avec des inserts 16A, 18A préalablement soudés au support de palier 10, retraités thermiquement puis ré-usinés à la cote finale et des flasques 16B, 18B faisant la liaison entre ces inserts et la chemise 20, plus précisément ses extensions 20B. Ces inserts et flasques sont réalisés en un matériau non magnétique, typiquement également en Inconel.

Le support 10 du palier est classiquement réalisé en 17-4 PH pour avoir un coefficient d'expansion thermique quasi identique à celui de l'ensemble bobiné 14 à base de fer-silicium, ce qui est nécessaire pour garantir le frettage des tôles ferromagnétiques dans le support jusqu'à des températures ambiantes élevées (typiquement jusqu'à 200°C).

L'assemblage de ce stator est réalisé comme suit. Les extensions 20B sont tout d'abord soudées à la partie centrale 20A pour former la chemise 20 puis l'ensemble est retraité thermiquement à environ 620°C et enfin repris en usinage pour pallier les déformations créées par le traitement à haute température. De même, les inserts latéraux 16A, 18A sont soudés au support de palier 10 puis l'ensemble est retraité également thermiquement à environ 620°C. Ce traitement thermique a bien sûr comme effet des déformations géométriques qui sont reprises ensuite par usinage. Les tôles ferromagnétiques bobinées du palier 14 peuvent alors être insérées par frettage dans le support 10 puis les flasques 16B, 18B sont soudés sur les inserts 16A, 18A et la chemise 20 est soudée sur les flasques, aucune de ces soudures ne nécessitant un retraitement thermique.

Ainsi, en munissant la chemise comme le support d'inserts non magnétiques, il devient possible, une fois ces inserts soudés à la fois sur la chemise et sur le support et l'ensemble ayant subi un recuit à haute température, de placer les tôles ferromagnétiques bobinées dans l'enceinte et de souder alors les inserts non magnétiques entre eux, sans recourir à un traitement thermique particulier et à une température compatible avec le matériau de ces tôles et bobinages.

Malheureusement, les opérations de traitement thermique initiales et de nécessaire ré-usinage sont longues et complexes et donc particulièrement coûteuses. Elles sont aussi sources d'anomalies de fabrication importantes, notamment au niveau de la chemise de palier bi-matière dont la très faible épaisseur rend la liaison avec les inserts particulièrement difficile.

### Objet et définition de l'invention

La présente invention a pour but de remédier aux inconvénients précités en proposant un stator chemisé de machine électromagnétique permettant notamment un fonctionnement dans un environnement pressurisé contenant de l'H2S et du CO2 humide tout en s'affranchissant de la nécessité de retraitement thermique des soudures et de nombreux ré-usinages. Un autre but de l'invention est aussi de s'affranchir de la nécessité d'avoir un support de palier dont le coefficient d'expansion thermique soit identique à celui des tôles ferromagnétiques ou de pouvoir utiliser pour ce support de palier des matériaux chers (tels que l'Inconel) en très faible épaisseur donc avec un coût minimum.

Ces buts sont atteints par un stator chemisé de machine électromagnétique pour machine tournante pressurisée évoluant dans une ambiance corrosive contenant de l'H2S ou du CO2 humide et comportant une pluralité de pièces polaires séparées du rotor par un entrefer, **caractérisé en ce que** l'enceinte hermétique protégeant ledit stator de ladite ambiance corrosive comporte une chemise constituée d'un cylindre non magnétique muni d'incrustations en matériau magnétique situées au droit desdites pièces polaires et qui ne sont pas en contact avec ladite ambiance corrosive, ladite enceinte hermétique n'étant constituée extérieurement que de pièces en matériaux non magnétiques solidarisées entre elles par des soudures n'ayant subies aucun traitement thermique.

En supprimant tout traitement thermique des soudures, on supprime le ré-usinage qui en résultait et on réduit d'autant les coûts de fabrication du stator tout en limitant les risques de malfaçons.

De préférence, ledit cylindre non magnétique comporte également des incrustations non magnétiques avantageusement constituées en un matériau électriquement non conducteur.

Lesdites incrustations en matériau magnétique peuvent aussi former elles-mêmes un cylindre magnétique et de préférence être isolées électriquement les unes des autres.

Selon le mode de réalisation envisagé, lesdites incrustations en matériau magnétique peuvent être soudées ou collées sur ledit cylindre non magnétique et ledit cylindre magnétique être alors avantageusement fretté sur ledit cylindre non magnétique.

Selon le mode de réalisation envisagé, pour former ladite enceinte hermétique, le stator peut en outre comporter des parois latérales en matériaux non magnétiques soudées à ladite chemise et une culasse en matériau non magnétique soudée auxdites parois latérales et frettée dans un support de stator en matériau magnétique capable de contenir la dilatation thermique radiale de ladite enceinte hermétique ou encore il peut comporter des parois latérales en matériaux non magnétiques soudées à ladite chemise et fixées sans soudure par des moyens de fixation à un support de stator en matériau magnétique, l'herméticité entre lesdites parois latérales et ledit support de stator étant obtenue par un ou plusieurs joints toriques métalliques ou polymères de type « O-Ring ».

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique d'un premier exemple de réalisation d'un stator de palier magnétique actif destiné à fonctionner en ambiance corrosive selon l'invention,
- la figure 1A est un détail de réalisation d'une soudure d'une incrustation magnétique dans la chemise de protection du stator de palier de la figure 1,
- la figure 1B est une vue en coupe partielle montrant la structure de la chemise de protection du stator de palier de la figure 1,
- la figure 2 est une vue schématique d'un second exemple de réalisation d'un stator de palier magnétique actif destiné à fonctionner en ambiance corrosive selon l'invention, et
- la figure 3 est une vue schématique d'un exemple de réalisation d'un stator de palier magnétique actif destiné à fonctionner en ambiance corrosive de l'art antérieur.

### Description détaillée d'un mode de réalisation préférentiel

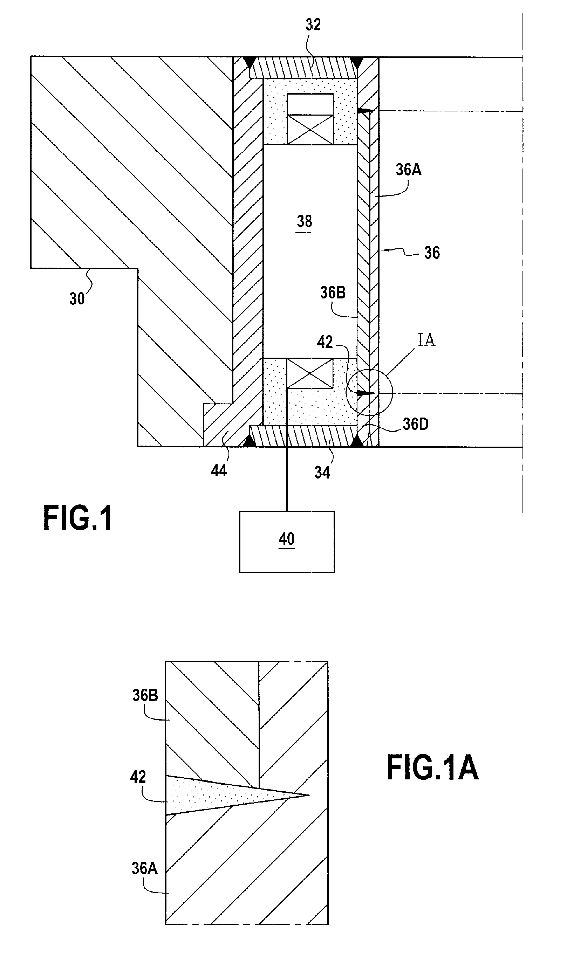

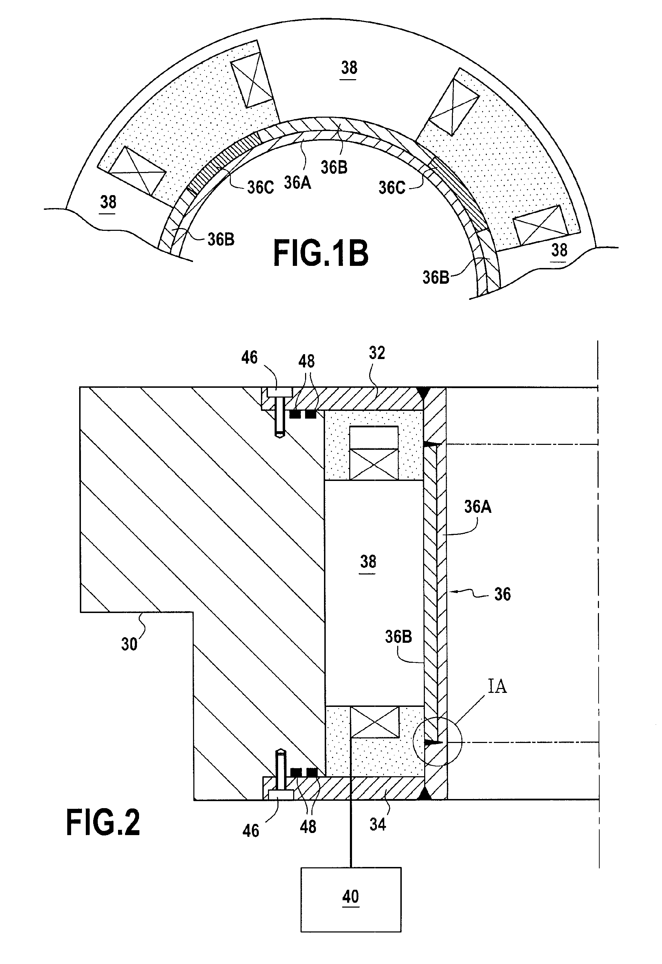

La figure 1 montre un premier exemple de réalisation d'un stator chemisé de machine électromagnétique, plus précisément d'un stator de palier magnétique actif chemisé destiné selon l'invention à fonctionner dans une ambiance conforme à la norme NACE MR0175 / ISO 15156. On retrouve bien entendu les constituants habituels d'un palier magnétique actif chemisé, à savoir le support de palier 30 avec ses parois latérales 32, 34 et la chemise 36 de protection des circuits magnétiques 38, lesquels sont reliés aux circuits de commande 40. On notera que si le palier illustré est un palier radial, il est clair que l'invention s'applique pareillement à un palier axial ou mixte.

Toutefois, au contraire de la structure de stator de palier de l'art antérieur, la chemise cylindrique 36 au droit de l'entrefer magnétique est exclusivement constituée en surface externe au stator d'un matériau non magnétique comme l'Inconel et ne laisse donc apparaître extérieurement aucune partie magnétique en contact avec le gaz de procédé pouvant contenir de l'H2S ou du CO2 humide. Toutes les autres parties du stator en contact avec le gaz de procédé sont aussi constituées de matériaux non magnétiques de type Inconel ou d'acier inoxydables non magnétiques (type 316 L, 304L ou 904L par exemple), le support de palier 30 restant bien entendu classiquement en acier inoxydable magnétique de type 17-4PH ou de matériau de coefficient d'expansion thermique proche de celui des tôles ferromagnétiques formant les pièces polaires 38.

La soudure de ces matériaux entre eux ne crée donc pas de zone de dureté supérieure aux recommandations de la norme NACE MR0175 / ISO 15156 et reste de ce fait parfaitement compatible avec une exposition à l'H2S ou au CO2 humide.

Plus particulièrement, la chemise 36 est constituée d'un premier cylindre 36A en un matériau non magnétique de type Inconel dans lequel est incrusté un second cylindre 36B en un matériau magnétique, typiquement un acier inoxydable magnétique 17-4 PH ou tout autre acier magnétique de même coefficient d'expansion thermique. Cette incrustation est réalisée sur la surface du premier cylindre qui n'est pas en contact avec le gaz de procédé pouvant contenir de l'H2S ou du CO2 humide. En outre, cette incrustation a pour conséquence de réduire l'entrefer magnétique. En effet, si la chemise a une épaisseur typique de 0.5 mm, et l'insert magnétique une épaisseur typique de 0.4 mm, l'entrefer mécanique étant typiquement de 0.8 mm, l'entrefer magnétique ne sera que de 0.9 mm au lieu de 1.3 mm pour une chemise non magnétique dépourvue d'une telle incrustation d'un cylindre magnétique.

Pour permettre cette incrustation du second cylindre dans le premier, le second cylindre est avantageusement constitué en plusieurs parties adjacentes ou non.

De plus, comme le montre la vue de détail de la figure 1B, les parties 36C situées entre les pôles du palier sont de préférence non magnétiques (et en un matériau électriquement conducteur ou avantageusement non conducteur pour améliorer la bande passante ainsi que les pertes grâce à la diminution des courants de Foucault circulant dans la chemise) alors que les parties 36B au droit des pôles sont magnétiques. On évite ainsi la réluctance court-circuitant les pôles et existant dans l'art antérieur tout en augmentant la bande passante et la capacité de charge du palier. Ces différentes parties du second cylindre peuvent être ou non isolées électriquement entre elles (par exemple par colle ou vernis) et sont solidarisées avec le premier cylindre par soudure ou par collage. Lorsque le second cylindre 36B, 36C est en une seule partie, celle-ci est avantageusement frettée sur le premier cylindre 36A, ce montage étant rendu possible par la présence d'une douille de fermeture en matériau non magnétique 36D soudée ou collée sur le premier cylindre 36A (voir la figure 1).

On notera, comme l'illustre la loupe de la figure 1A, que dans le cas d'une liaison par soudures 42, il n'y a plus besoin de traitement thermique car ces soudures bi-matières sujettes au durcissement ne seront jamais exposées au gaz de procédé contenant de l'H2S ou du CO2 humide. Si une reprise du diamètre intérieur exposé au gaz ambiant est nécessaire, seule la partie de soudure Inconel sur Inconel peut être exposée au gaz de procédé et il n'est alors toujours pas nécessaire d'avoir recours à un traitement thermique.

Pour assurer (figure 1) que les parties externes de l'enceinte enfermant hermétiquement les circuits magnétiques 38 du palier ne sont constituées que de parties non magnétiques et donc présentent l'avantage de pouvoir être soudées ensemble sans nécessiter ni traitement thermique ni ré-usinage tout en restant conformes aux recommandations de la norme NACE MR0175 / ISO 15156, les parois latérales 32, 34 ne sont pas soudées directement sur le support 30 mais sur une paroi externe ou culasse 44 en matériau non magnétique frettée (avant ou après assemblage) sur ce support. Ainsi, la culasse est frettée entre deux matériaux, celui du support et celui des tôles ferromagnétiques, ayant des coefficients d'expansion thermiques très voisins et conserve donc le frettage des tôles magnétiques indépendamment de la dilatation thermique due aux variations de température (donc sans risque de défrettage du noyau magnétique).

La culasse 44 peut être faite simplement à l'aide d'un cylindre d'Inconel (de préférence une tôle en Inconel roulée et soudée axialement pour des raisons de coût) afin de s'affranchir complètement des dilatations aussi bien radiales que longitudinales pouvant contraindre et fragiliser les soudures.

La chemise 36 au droit de l'entrefer magnétique ne laisse apparaître qu'un matériau non magnétique tel que l'Inconel. Elle est soudée aux parois 32, 34 de l'enceinte par soudure (BE, Laser, TIG, etc) sans aucune nécessité de traitement thermique. Les parois 32, 34 de l'enceinte peuvent être réalisées soit en acier inoxydable non magnétique 316 L ou analogue soit également en Inconel et sont soudée sur la culasse 44 de la même façon également sans traitement thermique.

L'ensemble ainsi formé est ensuite fretté sans soudure dans le support 30 en 17-4 PH ou un matériau ayant un coefficient d'expansion thermique voisin de celui des tôles ferromagnétiques. Ainsi, en comparaison avec l'art antérieur représenté à la figure 3, le nombre de soudure est réduit, réduisant en conséquence le risque de fuite, le temps de fabrication, le coût du palier et augmentant considérablement sa fiabilité.

La figure 2 illustre un autre exemple de réalisation dans lequel les parois latérales 32, 34 ne sont plus soudées à la culasse 44 mais fixées au support 30 par des moyens de fixation 46, par exemple des vis, l'herméticité de l'enceinte étant assurée par des joints toriques 48 métalliques ou polymères de type O-Ring montés dans des gorges circulaires appropriées du support.

## Revendications

1. Stator chemisé de machine électromagnétique pour machine tournante pressurisée évoluant dans une ambiance corrosive contenant de l'H2S ou du CO2 humide et comportant une enceinte hermétique protégeant ledit stator de ladite ambiance corrosive et une pluralité de pièces polaires (38) aptes à être séparées d'un rotor par un entrefer, **caractérisé en ce que** l'enceinte hermétique comporte une chemise constituée d'un cylindre non magnétique (36A) muni d'incrustations en matériau magnétique (36B) situées au droit desdites pièces polaires et qui ne sont pas en contact avec ladite ambiance corrosive, ladite enceinte hermétique n'étant constituée extérieurement que de pièces en matériaux non magnétiques (32, 34, 36A, 44) solidarisées entre elles par des soudures n'ayant subies aucun traitement thermique.

2. Stator chemisé de machine électromagnétique selon la revendication 1, **caractérisé en ce que** ledit cylindre non magnétique comporte également des incrustations non magnétiques (36C) entre lesdites pièces polaires.

3. Stator chemisé de machine électromagnétique selon la revendication 2, **caractérisé en ce que** lesdites incrustations non magnétiques sont constituées en un matériau non conducteur.

4. Stator chemisé de machine électromagnétique selon la revendication 1, **caractérisé en ce que**, pour former ladite enceinte hermétique, il comporte en outre des parois latérales (32, 34) en matériaux non magnétiques soudées à ladite chemise et une culasse (44) en matériau non magnétique soudée auxdites parois latérales et frettée dans un support de stator (30) capable de contenir la dilatation thermique radiale de ladite enceinte hermétique.

5. Stator chemisé de machine électromagnétique selon la revendication 1, **caractérisé en ce que**, pour former ladite enceinte hermétique, il comporte en outre des parois latérales (32, 34) en matériaux non magnétiques soudées à ladite chemise et fixées sans soudure par des moyens de fixation (46) à un support de stator (30), l'herméticité entre lesdites parois latérales et ledit support de stator étant obtenue par un ou plusieurs joints toriques (48) métalliques ou polymères de type « O-Ring ».

6. Stator chemisé de machine électromagnétique selon la revendication 1, **caractérisé en ce que** lesdites incrustations en matériau magnétique forment elles-mêmes un cylindre magnétique.

7. Stator chemisé de machine électromagnétique selon la revendication 6, **caractérisé en ce que** lesdites incrustations en matériau magnétique sont isolées électriquement les unes des autres.

8. Stator chemisé de machine électromagnétique selon la revendication 6, **caractérisé en ce que** ledit cylindre magnétique est fretté sur ledit cylindre non magnétique.

9. Stator chemisé de machine électromagnétique selon l'une quelconque des revendications 1 à 8, **caractérisé en ce que** lesdites incrustations en matériau magnétique sont soudées sur ledit cylindre non magnétique.

10. Stator chemisé de machine électromagnétique selon l'une quelconque des revendications 1 à 8, **caractérisé en ce que** lesdites incrustations en matériau magnétique sont collées sur ledit cylindre non magnétique.

11. Utilisation d'un stator chemisé de machine électromagnétique selon l'une quelconque des revendications 1 à 10 dans un palier magnétique actif chemisé ou un moteur électrique chemisé pour machine tournante pressurisée.

12. Utilisation d'un palier magnétique actif chemisé selon la revendication 11 dans un turboexpandeur.

13. Utilisation d'un palier magnétique actif chemisé selon la revendication 11 dans un compresseur.

14. Utilisation d'un palier magnétique actif chemisé selon la revendication 11 dans un moteur électrique.

## Patentansprüche

1. Verkleideter Stator einer elektromagnetischen Maschine für eine druckbeaufschlagte umlaufende Maschine, die sich in einer H2S oder CO2 enthaltenden korrosiven Umgebung bewegt und einen hermetischen Raum, welcher den Stator vor der korrosiven Umgebung schützt, sowie eine Vielzahl von Polschuhen (38) umfasst, die geeignet sind, von einem Rotor durch einen Luftspalt getrennt zu werden, **dadurch gekennzeichnet, dass** der hermetische Raum einen Mantel umfasst, der von einem nicht magnetischen Zylinder (36A) gebildet ist, welcher mit Einsätzen aus magnetischem Material (36B) versehen ist, die gegenüber den Polschuhen gelegen sind und die nicht mit der korrosiven Umgebung in Kontakt sind, wobei der hermetische Raum außen nur von durch Schweißnähte fest untereinander verbundenen Teilen aus nicht magnetischen Materialien (32, 34, 36A, 44), die keinerlei Wärmebehandlung unterzogen wurden, gebildet ist.

2. Verkleideter Stator einer elektromagnetischen Maschine nach Anspruch 1, **dadurch gekennzeichnet, dass** der nicht magnetische Zylinder auch nicht magnetische Einsätze (36C) zwischen den Polschuhen umfasst.

3. Verkleideter Stator einer elektromagnetischen Maschine nach Anspruch 2, **dadurch gekennzeichnet, dass** die nicht magnetischen Einsätze aus einem nicht leitenden Material gebildet sind.

4. Verkleideter Stator einer elektromagnetischen Maschine nach Anspruch 1, **dadurch gekennzeichnet, dass** er zur Bildung des hermetischen Raums ferner Seitenwände (32, 34) aus nicht magnetischen Materialien, die an den Mantel angeschweißt sind, sowie ein Joch (44) aus nicht magnetischem Material umfasst, das an die Seitenwände angeschweißt und in einen Statorhalter (30) geschrumpft ist, welcher geeignet ist, die radiale Wärmeausdehnung des hermetischen Raums in Schranken zu halten.

5. Verkleideter Stator einer elektromagnetischen Maschine nach Anspruch 1, **dadurch gekennzeichnet, dass** er zur Bildung des hermetischen Raums ferner Seitenwände (32, 34) aus nicht magnetischen Materialien umfasst, die an den Mantel angeschweißt und ohne Schweißen durch Befestigungsmittel (46) an einem Statorhalter (30) befestigt sind, wobei die Dichtheit zwischen den Seitenwänden und dem Statorhalter durch einen oder mehrere metallische oder polymere Dichtringe (48) vom Typ "O-Ring" erreicht wird.

6. Verkleideter Stator einer elektromagnetischen Maschine nach Anspruch 1, **dadurch gekennzeichnet, dass** die Einsätze aus magnetischem Material selbst einen magnetischen Zylinder bilden.

7. Verkleideter Stator einer elektromagnetischen Maschine nach Anspruch 6, **dadurch gekennzeichnet, dass** die Einsätze aus magnetischem Material voneinander elektrisch isoliert sind.

8. Verkleideter Stator einer elektromagnetischen Maschine nach Anspruch 6, **dadurch gekennzeichnet, dass** der magnetische Zylinder auf den nicht magnetischen Zylinder aufgeschrumpft ist.

9. Verkleideter Stator einer elektromagnetischen Maschine nach einem der Ansprüche 1 bis 8, **dadurch gekennzeichnet, dass** die Einsätze aus magnetischem Material auf den nicht magnetischen Zylinder geschweißt sind.

10. Verkleideter Stator einer elektromagnetischen Maschine nach einem der Ansprüche 1 bis 8, **dadurch gekennzeichnet, dass** die Einsätze aus magnetischem Material auf den nicht magnetischen Zylinder aufklebt sind.

11. Verwendung eines verkleideten Stators einer elektromagnetischen Maschine nach einem der Ansprüche 1 bis 10, bei einem verkleideten aktiven Magnetlager oder einem verkleideten Elektromotor für eine druckbeaufschlagte umlaufende Maschine.

12. Verwendung eines verkleideten aktiven Magnetlagers nach Anspruch 11 in einem Turboexpander.

13. Verwendung eines verkleideten aktiven Magnetlagers nach Anspruch 11 in einem Kompressor.

14. Verwendung eines verkleideten aktiven Magnetlagers nach Anspruch 11 in einem Elektromotor.

## Claims

1. A jacketed electromagnetic machine stator for a pressurized rotary machine operating in a corrosive atmosphere containing H₂S or wet CO₂ and including a hermetically sealed enclosure protecting said stator from said corrosive atmosphere and a plurality of pole pieces suitable to be separated from a rotor by an airgap, wherein the hermetically sealed enclosure includes a jacket constituted by a non-magnetic cylinder (36A) having magnetic material inlays (36B) situated in register with said pole pieces and that are not in contact with said corrosive atmosphere, said hermetically sealed enclosure being constituted externally solely by parts made of non-magnetic material (32, 34, 36A, 44) that are secured to one another by welds that have not been subjected to any heat treatment.

2. A jacketed electromagnetic machine stator according to claim 1, wherein said non-magnetic cylinder also includes non-magnetic inlays (36C) between said pole pieces.

3. A jacketed electromagnetic machine stator according to claim 2, wherein said non-magnetic inlays are made of a nonconductive material.

4. A jacketed electromagnetic machine stator according to claim 1, wherein, in order to form said hermetically sealed enclosure, the stator also includes side walls (32, 34) of non-magnetic materials welded to said jacket, and a yoke (44) of non-magnetic material welded to said side walls and interference-fitted in a stator support (30) capable of containing the radial thermal expansion of said hermetically sealed enclosure.

5. A jacketed electromagnetic machine stator according to claim 1, wherein, in order to form said hermetically sealed enclosure, the stator further includes side walls (32, 34) of non-magnetic materials welded to said jacket and fastened without welding by fastener means (46) to a stator support (30), hermetic sealing between said side walls and said stator support being obtained by one or more O-ring type metal or polymer gaskets (48).

6. A jacketed electromagnetic machine stator according to claim 1, wherein said inlays of magnetic material themselves form a magnetic cylinder.

7. A jacketed electromagnetic machine stator according to claim 6, wherein said inlays of magnetic material are electrically insulated from one another.

8. A jacketed electromagnetic machine stator according to claim 6, wherein said magnetic cylinder is interference-fitted on said non-magnetic cylinder.

9. A jacketed electromagnetic machine stator according to any one of claims 1 to 8, wherein said inlays of magnetic material are welded to said non-magnetic cylinder.

10. A jacketed cylinder of an electromagnetic machine according to any one of claims 1 to 8, wherein said inlays of non-magnetic material are adhesively bonded to said non-magnetic cylinder.

11. Use of a jacketed electromagnetic machine stator according to any one of claims 1 to 10 in a jacketed active magnetic bearing or in a jacketed electric motor for a pressurized rotary machine.

12. Use of a jacketed active magnetic bearing according to claim 11 in a turbo-expander.

13. Use of a jacketed active magnetic bearing according to claim 11 in a compressor.

14. Use of a jacketed active magnetic bearing according to claim 11 in an electric motor.
